# EUROPÄISCHE PATENTSCHRIFT

(11) **EP 1 338 510 B1**
(45) Veröffentlichungstag und Bekanntmachung des Hinweises auf die Patenterteilung: **07.09.2005**
(21) Anmeldenummer: 02003771.9
(22) Anmeldetag: 20.02.2002
(51) Int. Cl.: B65B 1/12

(54) **Verfahren und Vorrichtung zum Dosieren von Schüttgut**
Method and apparatus for dosing bulk material
Procédé et dispositif pour le dosage de produits en vrac

(43) Veröffentlichungstag der Anmeldung: 27.08.2003
(73) Patentinhaber: BMH Chronos Richardson GmbH, 53773 Hennef (DE)
(72) Erfinder: Schlösser, Werner, 53773 Hennef (DE)
(74) Vertreter: Neumann, Ernst Dieter

(56) Entgegenhaltungen:
- DE-A- 4 447 051
- DE-A- 19 962 475
- DE-C- 19 828 559
- US-A- 3 790 040

## Beschreibung

Die Erfindung betrifft ein Verfahren zum Befüllen von Behältnissen, insbesondere Säcken, mit Schüttgut mittels eines Aufgabetrichters und eines daran unten anschließenden Füllrohres mit einem axial im Füllrohr angeordneten axial verschiebbaren und verdrehbaren Förderorgan und einem mit dem unteren Ende des Förderorgans fest verbundenen axial verschiebbaren und drehbaren Verschlußorgan am unteren Ende des Füllrohres. Die Erfindung betrifft weiter eine Vorrichtung zum Befüllen von Behältnissen, insbesondere Säcken, mit Schüttgut, mit einem Aufgabetrichter und einem daran unten anschließenden Füllrohr mit einem koaxial im Füllrohr angeordneten axial verschiebbaren und drehbaren Förderorgan und einem mit dem unteren Ende des Förderorgans fest verbundenen axial verschiebbaren und verdrehbaren Verschlußorgan am unteren Ende des Füllrohres.

Ein Verfahren und eine Vorrichtung der genannten Art sind aus der DE 199 62 475 A1 bereits bekannt. Hierbei ist ein schnekken- oder wendelförmiges Förderorgan am unteren Ende fest mit einem Verschließkegel verbunden, so daß ein gemeinsamer Drehantrieb und ein gemeinsamer Hubantrieb für das Förderorgan und das Verschlußorgan verwendet werden können. Durch ein bevorzugtes stufenloses Verstellen der Hubhöhe des Verschlußorganes und ein drehendes Antreiben des Verschlußorganes bei geöffnetem Verschlußorgan ist eine besonders günstige Feindosierung unter Meidung der Gefahr von Brückenbildungen im Austrittsspalt zwischen Füllrohr und Verschlußorgan möglich. Bei problematischen klebrigen Schüttgütern kann es ungeachtet dieser Zwangsförderung im Füllrohr bis hin zum Austrittsspalt weiterhin zu Brückenbildungen und Anhaftungen im Aufgabetrichter kommen, die die Dosierfunktion der Vorrichtung fundamental beeinträchtigen. Daneben ist jedoch auch dann, wenn die ordnungsgemäße Dosierfunktion der Vorrichtung noch gegeben ist, jegliches Anhaften von Schüttgut im Aufgabetrichter, gegebenenfalls mit einem späteren Losbrechen von gealterten, verklebten oder verbackenen Partien, im Hinblick auf die Materialqualität des Schüttgutes oder bei Lebensmitteln im Hinblick auf hygienische Gesichtspunkte inakzeptabel. Die keilförmige Form des Aufgabetrichters begünstigt die genannten Fehlerursachen.

Aus der DE 198 28 559 C1 ist eine Dosiervorrichtung ähnlicher Art bekannt, bei der in einer Anordnung aus kegeligem Aufgabetrichter und daran unten anschließendem Füllrohr ein wendelförmiges drehend antreibbares Förderorgan vorgesehen ist und am unteren Ende des Füllrohres ein unabhängig drehend antreibbares und axial verschiebbares Verschließorgan vorgesehen ist. Das Förderorgan reicht nach oben bis in den Aufgabetrichter hinein und trägt am oberen Ende im Aufgabetrichter ein stabförmiges Rührwerk. Das Verschließorgan ist zum Öffnen eines ringförmigen Austrittsspaltes in das Füllrohr entgegen der höher endenden Förderwendel zurückziehbar. Hierbei kann es zur Verdichtung im Füllgutstrom und damit zu Störungen in der Dosierung des Füllgutes kommen.

Der vorliegenden Erfindung liegt somit die Aufgabe zugrunde, Verfahren und Vorrichtungen der eingangs genannten Art vorzuschlagen, mit denen auch problematische, insbesondere klebrige und zur Brückenbildung neigende Schüttgüter in gleichbleibender Dosier- und Materialqualität abgefüllt werden können. Die Lösung besteht in einem Verfahren der genannten Art, bei dem das Schüttgut während des Förderns durch das Förderorgan im Füllrohr gleichzeitig im Aufgabetrichter um die Trichterachse von axial festangeordneten Umwälzmitteln mechanisch umgewälzt wird, wobei die entsprechende Vorrichtung sich dadurch auszeichnet, daß der Aufgabetrichter kegelig ausgebildet ist und im Aufgabetrichter wandnah axial festangeordnete, um die Trichterachse drehend antreibbare Umwälzelemente vorgesehen sind. Eine bevorzugte Weiterbildung besteht darin, daß das Schüttgut während des Förderns durch das Förderorgan im Füllrohr gleichzeitig im Aufgabetrichter von Fördermitteln mechanisch zum Füllrohr hin gefördert wird, wobei eine entsprechende Vorrichtung sich dadurch auszeichnet, daß im Aufgabetrichter um die Trichterachse drehend antreibbare Förderelemente vorgesehen sind.

Gemäß der Erfindung wird ein Umwälzen des Schüttgutes im Aufgabetrichter vorgeschlagen, bei dem durch wandnahe Rührelemente ein Anhaften von Schüttgut an der Trichterwand ausgeschlossen wird, so daß ein ständiger Zustrom zum Füllrohr sichergestellt ist. Hierbei sind die Umwälzelemente, die insbesondere als parallel zur Wand des Aufgabetrichters verlaufende Blätter ausgebildet sind, vorzugsweise axial zur Trichterachse unverschieblich mit gleichem Abstand zur Trichterwand angeordnet, so daß zwei ineinanderliegende axial gegeneinander verschiebliche Wellen einzusetzen sind. Der gleichbleibende Abstand der genannten Blätter zur Trichterwand des Aufgabetrichters sichert die gleichbleibende Effektivität des Umwälzprozesses. Das Umwälzen im Aufgabetrichter soll mit geringerer Umlauffrequenz erfolgen, als der Antrieb des Förderorgans zum Fördern des Schüttgutes im Füllrohr. Die Umwälzelemente im Aufgabetrichter und das Förderorgan im Füllrohr können dabei über entsprechende Übersetzungsstufen von einem gemeinsamen Antriebsorgan angetrieben werden. Es ist jedoch auch möglich, separate Antriebsorgane vorzusehen, so daß ein dauerndes Umwälzen im Aufgabetrichter auch dann möglich ist, wenn das rotierend antreibbare Förderorgan stillsteht und das Verschlußorgan in Schließstellung ist.

Nach einer bevorzugten Ausführungsform wird innerhalb des Fülltrichters, insbesondere in einem zentralen Bereich, das Schüttgut zusätzlich zum Füllrohr hin gefördert. Soweit nur die Gefahr der Brückenbildung von pulverförmigen Stoffen und weniger die Klebrigkeit des Materials betroffen ist, sichert diese Ausführungsform einen zuverlässigen Zustrom aus dem Aufgabetrichter in das Füllrohr. Hierbei wird vorgeschlagen, daß die Fördermittel im Aufgabetrichter mit gleicher Umlauffrequenz angetrieben werden, wie das Förderorgan zum Fördern des Schüttguts im Füllrohr. In diesem Zusammenhang wird nach einer ersten Variante vorgeschlagen, daß die Förderelemente im Aufgabetrichter mit gleichbleibendem axialen Abstand zum Förderorgan im Füllrohr angeordnet sind, damit es beim Anheben und Absenken des Förderorgans nicht zu internen Verdichtungsprozessen kommen kann. Vorteilhaft ist hierbei besonders, daß nicht nur das gleiche Antriebsorgan verwendet werden kann, sondern dieses auch auf eine einzige gemeinsame Antriebswelle einwirken kann, mit der sowohl das Förderorgan im Füllrohr mit anhängendem Verschließorgan als auch die zusätzlichen Förderelemente im Aufgabetrichter fest verbunden sein können. Die genannte Welle ist dabei mit dem Antriebsmotor oder relativ zum Antriebsmotor axial verstellbar auszuführen. Nach einer zweiten Variante wird vorgeschlagen, daß die Förderelemente im Aufgabetrichter axial fest in diesem angeordnet sind, insbesondere im oberen Trichterbereich, so daß sich der Abstand zum axial verschieblichen Förderorgan beim Öffnen und Schließen des Verschlußorgans jeweils ändert. In dieser Ausführung ist zwar ein gemeinsames Antriebsorgan möglich, dieses muß jedoch zwei ineinanderliegende axial gegeneinander verschiebliche Wellen für die Förderelemente im Aufgabetrichter und für das Förderorgan im Füllrohr antreiben. Die zusätzlichen Förderelemente können die Form eines Schneckenabschnitts oder einzelner Schaufelblätter oder eines Wendelabschnitts haben, die eine Steigung gegenüber der Achse des Aufgabetrichters aufweisen.

Auf der Oberseite des mit dem Förderorgan drehend antreibbaren Verschlußorganes kann zur Begünstigung des Dosierstromes eine Beschaufelung mit oder ohne Steigung zur Längsachse angeordnet sein. Die Drehbewegungen und die Axialbewegung des Förderorgans und des Verschlußorgans können wie bekannt unabhängig voneinander gesteuert werden oder nach bestimmten Abhängigkeiten in Beziehung zueinander gesetzt werden. Der am unteren Ende des Förderorgans angebrachte Verschlußkegel ist bevorzugt lösbar an ersterem angebracht. Beide Teile bilden jedoch in einbaufertigem Zustand eine bauliche Einheit. Hiermit können Schmutznester und Toträume im Förderstrom bereits konstruktiv weitgehend vermieden werden. Das Förderorgan ist bevorzugt eine endlose Schnecke auf einer zentralen Welle. Der Verschlußkegel schließt sich bevorzugt querschnittsgleich an die Welle an. Der Verschlußkegel hat in seinem unteren durchmessergrößtem Bereich einen Dichtabschnitt, der sich bei angehobenem Verschlußkegel dichtend an das untere Ende des Füllrohres anlegt.

Ein bevorzugtes Ausführungsbeispiel der Erfindung, das die beiden genannten Lösungsansätze in Kombination erkennen läßt, ist in den Zeichnungen dargestellt und wird nachstehend beschrieben.

Hierin zeigen
- Figur 1: die Gesamtvorrichtung in einem Axialschnitt in einer Öffungsstellung zur Grobdosierung bei weit geöffnetem Verschlußorgan;
- Figur 2: die Lagerungs- und Antriebsmittel des Förderorgans und der Umwälzvorrichtung nach Figur 1 im Axialschnitt;
- Figur 3: die Lagerungs- und Antriebsmittel nach Figur 2 in einem zu dieser senkrechten Axialschnitt;
- Figur 4: die Lagerungs- und Antriebsmittel nach Figur 3 in einem Horizontalschnitt;
- Figur 5: das Verschlußorgan im Längsschnitt durch das Füllrohr in einer Öffnungsstellung zur Feindosierung als Einzelheit.

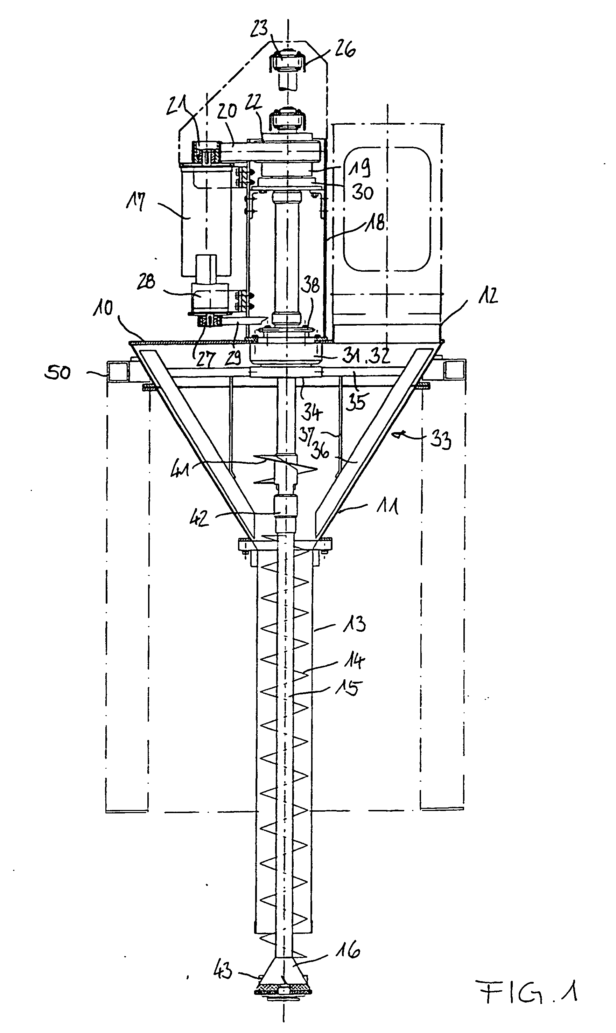

Figur 1 zeigt eine Vorrichtung der erfindungsgemäßen Art mit einem kegeligen Aufgabetrichter 11 mit einem oben achsversetzt anschließenden Einfüllstutzen 12 und einem unten koaxial anschließenden Füllrohr 13. Im Füllrohr liegt eine Förderschnekke 14 ein, die von einer Schneckenwelle 15 getragen wird. Am unteren Ende der Schneckenwelle 15 ist der sich nach unten erweiternde Verschlußkegel 16 angeordnet. Der Aufgabetrichter 11 wird von einer Grundplatte 10 für die Lagerungs- und Antriebsmittel abgedeckt, die ein Gestell 18 trägt. Die Welle ist in noch näher zu beschreibender Weise zweifach gelagert und wird von einem Antriebsmotor 17, der an das Gestell 18 angeschraubt ist, über einen Zahnriemen 20 angetrieben. Eine erste Riemenscheibe 21 sitzt auf dem Wellenzapfen des Antriebsmotors 17; eine zweite Riemenscheibe 22 auf einer Mitnehmerhülse 19, in der die Schneckenwelle 15 drehgesichert und axial verschieblich gehalten ist. Als Mitnehmerhülse 19 kann eine Drehmomentkugelbüchse mit in Kugelrillen eingreifenden Kugeln vorgesehen sein. Das obere Ende der Schneckenwelle 15 ist mittels eines Axiallagers 23 in einem Portalträger 26 aufgehängt, die hier gemeinsam in zwei verschiedenen Axialpositionen dargestellt sind. Zur Verstellung des Portalträgers 26 dient ein Stellmotor 28, der ebenfalls am Gestell 18 angeschraubt ist. Der Stellmotor 28 wirkt auf einen Zahnriemen 29 ein. Eine erste Riemenscheibe 27 ist auf dem Wellenzapfen des Stellmotors 28 erkennbar. Die Schneckenwelle 15 ist unterhalb der Mitnehmerhülse 19 mittels eines oberen Radiallagers 30 im Gestell 18 gelagert und in Höhe der Trichteröffnung des Aufgabetrichters 11 mittels einer unteren Lagerstelle 31, 32. Im Aufgabetrichter 11 ist eine erfindungsgemäße Umwälzvorrichtung 33 erkennbar, die an einer von der Schneckenwelle 15 unabhängig drehbaren Hülse 34 angehängt ist, die unmittelbar im Gestell 18 gelagert ist. Die Vorrichtung umfaßt weiterhin Radialarme 35, die an der Hülse 34 ansetzen, sowie Blattelemente 36, wobei eine Aussteifung mittels Stäben 37 erkennbar ist. Am oberen Ende der Hülse 34 ist ein Kettenrad 38 erkennbar, das einen unabhängigen Drehantrieb der Umwälzvorrichtung 33 ermöglicht. Im unteren Zentralbereich des Aufgabetrichters ist weiterhin eine Förderelement 41 in Form eines auf der Schneckenwelle 15 aufgesetzten Schneckenganges erkennbar. Unterhalb dieses Schneckenganges 41 ist die Schneckenwelle 15 geteilt, wobei eine Überwurfmutter 42 die Verbindung der zweigeteilten Welle darstellt. Als weitere Einzelheit ist am Verschlußkegel 16 eine Beschaufelung 43 erkennbar. Die Gesamtanordnung kann über eine Nettowagevorrichtung in einem Gestell 50 aufgehängt sein.

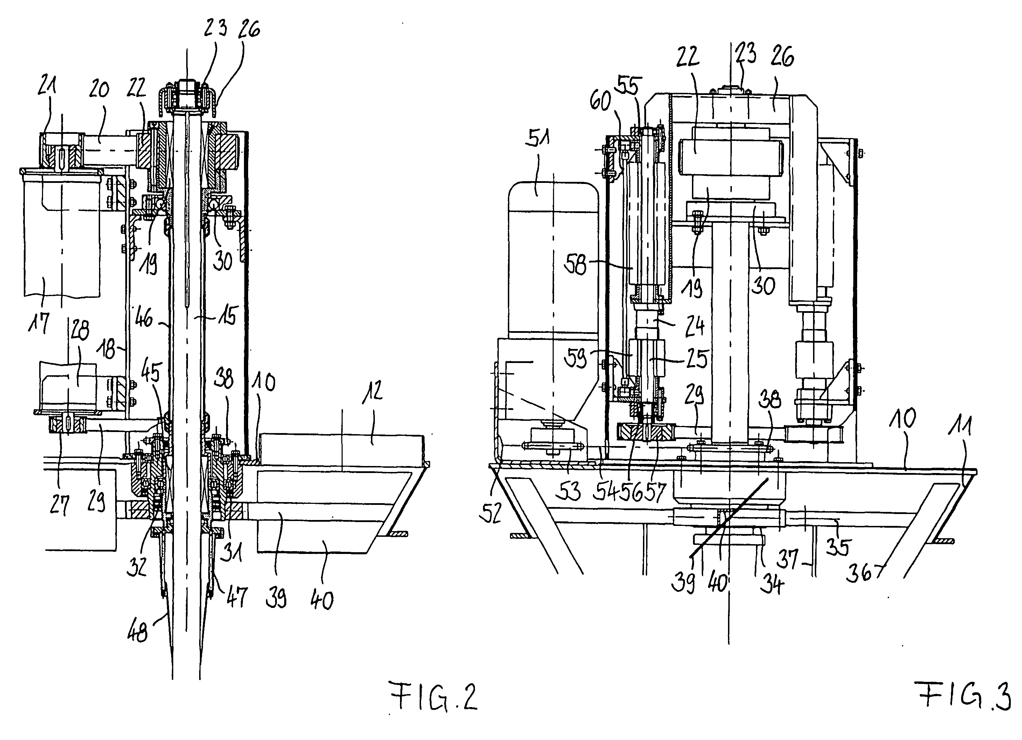

Die Figuren 2 und 3 werden nachstehend gemeinsam beschrieben. Gleiche Einzelheiten sind mit gleichen Bezugsziffern wie in Figur 1 bezeichnet. Auf die Beschreibung dieser Figur wird ergänzungsweise Bezug genommen.

In Figur 2, die im Vergleich mit Figur 1 zusätzliche Schnittdarstellungen zeigt, ist insbesondere das obere Axiallager 23 zur Lagerung des oberen Wellenendes im Portalträger 26, das Radiallager 30 zur Lagerung der Mitnehmerhülse 19 im Gestell 18 sowie die untere Lagerkonstruktion erkennbar, die ein äußeres Radiallager 31 zur Lagerung der Hülse 34 im Gestell 18 und ein inneres Radiallager 32 zur Lagerung der Schneckenwelle 15 in der Hülse 34 umfaßt. Auf die Schneckenwelle 15 ist eine Dreh- und Axialführungshülse 45 aufgezogen. Diese kann als Kugelbüchse für die Dreh- und Axialführung mit auf dem Wellenschaft laufenden Kugeln ausgebildet sein. Zwischen der Mitnehmerhülse 19 und der Dreh- und Axialführungshülse 45 ist die Welle durch ein Schutzrohr 46 nach außen abgedichtet. An die Dreh- und Axialführungshülse 45 schließt sich unten eine Hülse 47 an, die eine flexible Dichtmanschette 48 trägt, die an der Schneckenwelle 15 abdichtend anliegt.

In Figur 3 ist ein weiterer Antriebsmotor 51 erkennbar, der an einem Anbauwinkel 52 angebracht ist und fest mit der Grundplatte 10 verbunden ist. Auf dem Wellenzapfen des Antriebsmotors 51 sitzt ein Kettenrad 53, das über eine Kette 54 mit dem Kettenrad 38 der Umwälzvorrichtung 33 in Antriebsverbindung ist. Das Portal 26 ist als nach unten offene U-Konstruktion erkennbar, in dessen oberem Querträger das Axiallager 23 sitzt. Die beiden Schenkelenden des Portals 26 sind mit Spindelmuttern 24 verbunden, die auf zweifach im Gestell 18 gelagerten Spindeln 25 laufen. Hierbei sind obere Lager 55 und untere Lager 56 bezeichnet. Auf den aus den unteren Lagern vorstehenden Spindelzapfen sind Riemenscheiben 57 aufgesetzt, die über den Zahnriemen 29 von der Riemenscheibe 27 des Stellmotors 28 antreibbar sind. Durch Betätigen dieses Stellmotors 28 werden die Spindeln 25 drehend angetrieben, so daß sich die Spindelmuttern 24 und mit ihnen das Portal 26 heben oder senken. Das Portal 26 hebt seinerseits über das Axiallager 23 die Schneckenwelle 15. Die Spindeln 25 sind durch obere Bälge 58 und untere Bälge 59 abgedichtet. Zum Druckausgleich zwischen diesen sind Luftausgleichsleitungen 60 vorgesehen. An der Umwälzvorrichtung 33, deren Blätter 36 wandparallel zum Aufgabetrichter 11 verlaufen, sind zusätzlich mit Steigung zur Achse angebrachte Förderschaufeln 39 über Winkelbleche 40 angesetzt. Diese Förderschaufeln 39 sind nicht axial verschieblich im Aufgabetrichter, wobei jedoch aufgrund der geringen Umfangserstreckung, der geringen Umlauffrequenz und des großen Abstandes zum Förderelement 14 im Füllrohr keine Materialverdichtung zu befürchten ist. Zur Anpassung an Produkteigenschaften können die Förderschaufeln 39 austauschbar oder mit einstellbarer Steigung ausgebildet sein.

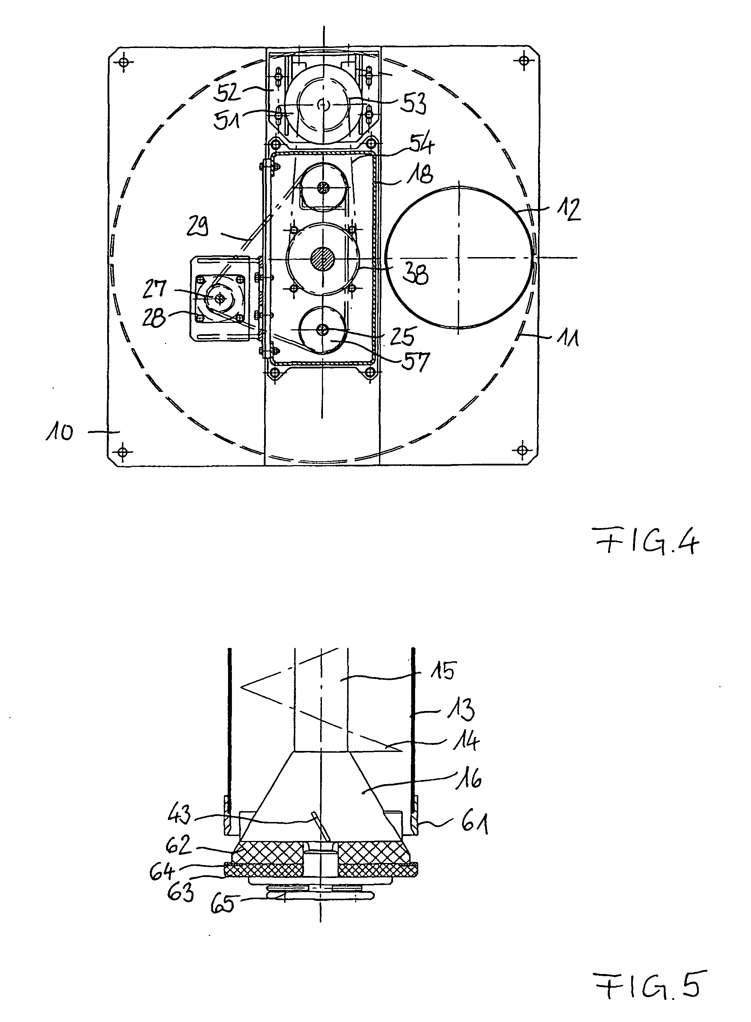

In Figur 4 sind gleiche Einzelheiten wie in den vorhergehenden Figuren mit gleichen Bezugsziffern belegt. Auf die Beschreibung dieser Figuren wird ergänzungsweise Bezug genommen. Es sind die Grundplatte 10 des Aufgabetrichters 11 und der Einfüllstutzen 12 erkennbar. Auf der Grundplatte 10 ist der am Gestell 18 angebaute Stellmotor 28 mit der Riemenscheibe 27 und die Spindeln 25 mit den Riemenscheiben 57 und dem Zahnriemen 29 gezeigt. Weiterhin ist der Antriebsmotor 51 mit dem Befestigungswinkel 52 gezeigt, der über das Kettenrad 53, die Kette 54 und das Kettenrad 38 auf der Hülse für den Antrieb der Umwälzvorrichtung antreibt.

In Figur 5 ist das untere Ende des Füllrohres 13 mit Schnekkenwelle 15 und angedeuteter Schnecke 14 erkennbar. Auf dieses Ende ist ein Ventilsitz 61 aufgesetzt. An die Schneckenwelle 15 schließt sich der Verschlußkegel 16 an, auf dessen Oberseite sich die bereits genannte Beschaufelung 43 befindet. Der untere Teil des Kegels 16 wird aus zwei Kunststoffscheiben 62, 63 mit einer eingelegten Dichtung 64 gebildet, die über nicht näher bezeichnete Haltemittel 65 mit dem Kegel 16 verbaut sind.

### Bezugszeichenliste

- 10: Grundplatte
- 11: Aufgabetrichter
- 12: Einfüllstutzen
- 13: Füllrohr
- 14: Förderschnecke
- 15: Schneckenwelle
- 16: Verschlußkegel
- 17: Antriebsmotor
- 18: Gestell
- 19: Mitnehmerhülse
- 20: Zahnriemen
- 21: Riemenscheibe
- 22: Riemenscheibe
- 23: Kugellager
- 24: Spindelmutter ,
- 25: Spindel
- 26: Portalträger
- 27: Riemenscheibe
- 28: Stellmotor
- 29: Zahnriemen
- 30: Radiallager
- 31: Radiallager
- 32: Radiallager
- 33: Umwälzvorrichtung
- 34: Hülse
- 35: Arm
- 36: Blatt
- 37: Stab
- 38: Kettenrad
- 39: Förderschaufel
- 40: Winkel
- 41: Förderelement
- 42: Überwurfmutter
- 43 44: Beschaufelung
- 45: Dreh- und Axialführungshülse
- 46: Schutzrohr
- 47: Anschlußhülse
- 48 49: Manschette
- 50: Gestell
- 51: Antriebsmotor
- 52: Anbauwinkel
- 53: Kettenrad
- 54: Kette
- 55: Lager
- 56: Lager
- 57: Riemenscheibe
- 58: Balg
- 59: Balg
- 60: Druckausgleichsleitung
- 61: Ventilsitz
- 62: Scheibe
- 63: Scheibe
- 64: Dichtung
- 65: Haltemittel

## Patentansprüche

1. Verfahren zum Befüllen von Behältnissen, insbesondere Säkken, mit Schüttgut mittels eines Aufgabetrichters und eines daran unten anschließenden Füllrohres mit einem koaxial im Füllrohr angeordneten axial verschiebbaren und verdrehbaren Förderorgan und einem mit dem unteren Ende des Förderorgans fest verbundenen axial verschiebbaren und drehbaren Verschlußorgan am unteren Ende des Füllrohres,
**dadurch gekennzeichnet,**
**daß** das Schüttgut während des Förderns durch das Förderorgan im Füllrohr gleichzeitig im Aufgabetrichter um die Trichterachse mittels axial festangeordneter Umwälzmittel mechanisch umgewälzt wird.

2. Verfahren nach Anspruch 1,
**dadurch gekennzeichnet,**
**daß** das Schüttgut während des Förderns durch das Förderorgan im Füllrohr gleichzeitig im Aufgabetrichter mechanisch zum Füllrohr hin gefördert wird.

3. Verfahren nach Anspruch 1,
**dadurch gekennzeichnet,**
**daß** Umwälzmittel zum Umwälzen des Schüttguts im Aufgabetrichter mit geringerer Umlauffrequenz angetrieben werden, als das rotierende Förderorgan zum Fördern des Schüttguts im Füllrohr.

4. Verfahren nach Anspruch 2,
**dadurch gekennzeichnet,**
**daß** Fördermittel zum Fördern des Schüttguts im Aufgabetrichter mit gleicher Umlauffrequenz angetrieben werden, wie das rotierende Förderorgan zum Fördern des Schüttguts im Füllrohr.

5. Vorrichtung zum Befüllen von Behältnissen, insbesondere Säcken, mit Schüttgut, mit einem Aufgabetrichter (11) und einem daran unten anschließenden Füllrohr (13) mit einem koaxial im Füllrohr (13) angeordneten axial verschiebbaren und drehbaren Förderorgan (14, 15) und einem mit dem unteren Ende des Förderorgans fest verbundenen axial verschiebbaren und drehbaren Verschlußorgan (16) am unteren Ende des Füllrohres (13),
**dadurch gekennzeichnet,**
**daß** der Aufgabetrichter (11) kegelig ausgebildet ist und im Aufgabetrichter (11) wandnah axial zur Trichterachse unverschieblich angeordnete um die Trichterachse drehend antreibbare Umwälzelemente (33) vorgesehen sind.

6. Vorrichtung nach Anspruch 5,
**dadurch gekennzeichnet,**
**daß** im Aufgabetrichter (11) um die Trichterachse drehend antreibbare Förderelemente (39, 41) vorgesehen sind.

7. Vorrichtung nach Anspruch 5,
**dadurch gekennzeichnet,**
**daß** die Umwälzelemente (33) als parallel zur Wand des Aufgabetrichters verlaufende Blätter (36) ausgebildet sind.

8. Vorrichtung nach Anspruch 7,
**dadurch gekennzeichnet,**
**daß** die Umwälzelemente (33) mit gleichbleibendem Abstand zur Wand des Aufgabetrichters (11) angeordnet sind.

9. Vorrichtung nach Anspruch 8,
**dadurch gekennzeichnet,**
**daß** die Umwälzelemente (33) von einem separaten Antriebsmotor (51) angetrieben werden.

10. Vorrichtung nach Anspruch 6,
**dadurch gekennzeichnet,**
**daß** die Förderelemente (39, 41) im Aufgabetrichter (11) als mit Steigung zur Achse des Aufgabetrichters (11) angeordnete Förderschnecken oder Förderschaufeln oder Förderwendeln ausgebildet sind.

11. Vorrichtung nach Anspruch 10,
**dadurch gekennzeichnet,**
**daß** die Förderelemente (41) im Aufgabetrichter (11) mit gleichbleibendem axialen Abstand zum Förderorgan (14, 15)
im Füllrohr angeordnet sind und vom gleichen Antriebsmotor (17) wie dieses angetrieben werden.

12. Vorrichtung nach einem der Ansprüche 6, 10 oder 11,
**dadurch gekennzeichnet,**
**daß** die Förderelemente (39) im Aufgabetrichter axial unverschieblich im Aufgabetrichter (11) angeordnet sind und insbesondere von einem separaten Antriebsmotor (51) angetrieben werden.

## Claims

1. A method for filling containers, especially sacks, with bulk material using a feed hopper and a filling pipe connected thereto at the bottom with an axially displaceable and rotatable conveying member arranged coaxially in the filling pipe and an axially displaceable and rotatable closure member at the lower end of the filling pipe, which closure member is connected fixedly to the lower end of the conveying member,
**characterised in**
**that** as it is conveyed by the conveying member in the filling pipe the bulk material is simultaneously circulated mechanically in the feed hopper about the hopper axis by means of an axially fixedly arranged circulating means.

2. The method according to claim 1,
**characterised in**
**that** as it is conveyed by the conveying member in the filling pipe, the bulk material is simultaneously conveyed mechanically in the feed hopper to the filling pipe.

3. The method according to claim 1,
**characterised in**
**that** circulating means for circulating the bulk material in the feed hopper are driven at a lower rotational frequency that the rotating conveying member for conveying the bulk material in the filling pipe.

4. The method according to claim 2,
**characterised in**
**that** conveying means for conveying the bulk material in the feed hopper are driven at the same rotational frequency as the rotating conveying member for conveying the bulk material in the filling pipe.

5. A device for filling containers, especially sacks, with bulk material comprising a feed hopper (11) and a filling pipe (13) connected thereto at the bottom with an axially displaceable and rotatable conveying member (14, 15) arranged coaxially in the filling pipe (13) and an axially displaceable and rotatable closure member (16) at the lower end of the filling pipe (13), which closure member is connected fixedly to the lower end of the conveying member,
**characterised in**
**that** the feed hopper (11) is embodied as conical and circulating elements (33) which are rotatingly drivable about the hopper axis and arranged so as to be axially indisplacable to the hopper axis are provided in the feed hopper (11) close to the wall.

6. The device according to claim 5,
**characterised in**
**that** conveyor elements (39, 41) which are rotatingly drivable about the hopper axis are provided in the feed hopper (11).

7. The device according to claim 5,
**characterised in**
**that** the circulating elements (33) are embodied as blades (36) running parallel to the wall of the feed hopper.

8. The device according to claim 7,
**characterised in**
**that** the circulating elements (33) are arranged at the same distance to the wall of the feed hopper (11).

9. The device according to claim 8,
**characterised in**
**that** the circulating elements (33) are driven by a separate drive motor (51).

10. The device according to claim 6,
**characterised in**
**that** the conveyor elements (39, 41) in the feed hopper (11) are embodied as conveyor screws or conveyor vanes or conveyor helixes arranged with a slope to the axis of the feed hopper (11).

11. The device according to claim 10,
**characterised in**
**that** the conveyor elements (41) in the feed hopper (11) are arranged at the same axial distance from the conveying member (14, 15)
in the filling pipe and are driven by the same drive motor (17) as this.

12. The device according to any one of claims 6, 10 or 11,
**characterised in**
**that** the conveying elements (39) in the feed hopper are arranged so as to be axially indisplacable in the feed hopper (11) and are especially driven by a separate drive motor (51).

## Revendications

1. Procédé de remplissage de contenants, notamment de sacs avec des produits en vrac à l'aide d'une trémie d'alimentation et d'un tube de remplissage qui s'y raccorde par le bas, avec un organe de transport disposé de façon coaxiale dans le tube de remplissage, déplaçable en direction axiale et déplaçable angulairement et avec un organe de fermeture sur l'extrémité inférieure du tube de remplissage, fixement relié à l'extrémité inférieure de l'organe de transport, déplaçable en direction axiale et rotatif,
**caractérisé en ce que**
pendant le transport à travers l'organe de transport dans le tube de remplissage, le produit en vrac est simultanément brassé mécaniquement dans la trémie d'alimentation autour de l'axe de la trémie, à l'aide de moyens de brassage fixement disposés en direction axiale.

2. Procédé selon la revendication 1
**caractérisé en ce que**
pendant le transport à travers l'organe de transport dans le tube remplissage, le produit en vrac est simultanément transporté mécaniquement dans la trémie d'alimentation vers le tube de remplissage.

3. Procédé selon la revendication 1
**caractérisé en ce que**
des moyens de brassage pour le brassage du produit en vrac dans la trémie d'alimentation sont entraînés avec une fréquence de rotation inférieure à celle de l'organe de transport rotatif pour le transport du produit en vrac dans le tube de remplissage.

4. Procédé selon la revendication 2,
**caractérisé en ce que**
des moyens de transport pour le transport du produit en vrac dans la trémie d'alimentation sont entraînés à une fréquence de rotation identique à celle de l'organe de transport rotatif pour le transport du produit en vrac dans le tube de remplissage.

5. Dispositif de remplissage de contenants, notamment de sacs avec des produits en vrac, avec une trémie d'alimentation (11) et un tube de remplissage (13) qui s'y par raccorde par le bas, avec un organe de transport (14, 15) disposé de façon coaxiale dans le tube de remplissage (13), déplaçable en direction axiale et rotatif et avec un organe de fermeture (16) sur l'extrémité inférieure du tube de remplissage (13), fixement relié à l'extrémité inférieure de l'organe de transport, déplaçable en direction axiale et rotatif,
**caractérisé en ce que**
la trémie de remplissage (11) est conçue sous forme conique et **en ce que** des éléments de brassage (33) disposés de façon indéplaçable en direction axiale par rapport à l'axe de trémie (11) et pouvant être entraînés en rotation autour de l'axe de la trémie sont prévus dans la trémie d'alimentation, à proximité des parois.

6. Dispositif selon la revendication 5,
**caractérisé en ce que**
des éléments de transport (39, 41) pouvant être entraînés en rotation autour de l'axe de trémie sont prévus dans la trémie d'alimentation (11).

7. Dispositif selon la revendication 5,
**caractérisé en ce que**
les éléments de brassage (33) sont conçus sous la forme de pales (36) s'étendant à la parallèle de la paroi de la trémie d'alimentation.

8. Dispositif selon la revendication 7,
**caractérisé en ce que**
les éléments de brassage (33) sont disposés à distance constante par rapport à la paroi de la trémie de remplissage (11).

9. Dispositif selon la revendication 8,
**caractérisé en ce que**
les éléments de brassage (33) sont entraînés par un moteur d'entraînement (51) séparé.

10. Dispositif selon la revendication 6
**caractérisé en ce que**
les éléments de transport (39, 41) dans la trémie d'alimentation (11) sont conçus sous la forme de vis sans fin de transport ou de pales de transport ou d'hélices de transport, disposées avec un pas en direction de l'axe de la trémie d'alimentation (11).

11. Dispositif selon la revendication 10,
**caractérisé en ce que**
les éléments de transport (41) dans la trémie d'alimentation (11) sont disposés avec une distance constante par rapport à l'organe de transport (14, 15) dans le tube de remplissage et **en ce qu'**ils sont entraînés par le même moteur d'entraînement (17) que celui-ci.

12. Dispositif selon l'une quelconque des revendications 6, 10 ou 11
**caractérisé en ce que**
dans la trémie d'alimentation, les éléments de transport (39) sont disposés de façon indéplaçable en direction axiale dans la trémie d'alimentation (11) et que notamment, ils sont entraînés par un moteur d'entraînement (51) séparé.
